# EUROPEAN PATENT APPLICATION

(11) **EP 2 434 156 A1**
(43) Date of publication of application: **28.03.2012**
(21) Application number: 10777662.7
(22) Date of filing: 06.05.2010
(51) Int. Cl.: F04B 37/16, F04C 25/02, F16J 15/32

(54) **DRY VACUUM PUMP**

(30) Priority: 20.05.2009 JP 2009122499; 20.05.2009 JP 2009122500
(71) Applicant: Mitsubishi Heavy Industries, Ltd., Tokyo 108-8215 (JP); Ulvac, Inc., Chigasaki-shi Kanagawa 253-8543 (JP)
(72) Inventor: OHTSUBO, Eiichiro, Nagasaki-shi Nagasaki 850-8610 (JP); MARUYAMA, Yoshifumi, Nagasaki-shi Nagasaki 850-8610 (JP); INOUE, Hideaki, Chigasaki-shi Kanagawa 253-8543 (JP); KITA, Ryousuke, Chigasaki-shi Kanagawa 253-8543 (JP); MIZUSHIMA, Hirokazu, Chigasaki-shi Kanagawa 253-8543 (JP)
(74) Representative: Bongiovanni, Simone
(86) International application number: PCT/JP2010/057776
(87) International publication number: WO 2010/134427

(57) **Abstract**

Between an exhaust chamber (13) and a lubrication chamber (12), a second seal (28) that seals between a cylinder (7) that partitions the exhaust chamber(13) and a first shaft (5) and a first seal (27) that seals between a side cover (9) that partitions the lubrication chamber (12) and the first shaft (5) are provided. A gas introduction space (29) to which a seal gas is supplied is provided between the second seal (28) and the first seal (27). The second seal (28) and the first seal (27) each have a base part and a pair of ring-like lips (31, 32, 33, and 34) extending from the base part toward the first shaft (5). The pair of lips (31 and 32 or 33 and 34) extends such that the distance therebetween is gradually increased from the base part toward the first shaft (5), and the tips of the pair of lips can be brought into elastic contact with the first shaft (5).

## Description

### {Technical Field}

The present invention relates to a dry vacuum pump for evacuating a vacuum processing chamber.

### {Background Art}

A dry vacuum pump has a structure in which liquid, such as oil, is not brought into contact with an exhaust gas and is often used in the semiconductor manufacturing field etc., for which high system cleanliness is required. Although there are many types of dry vacuum pumps, in a general dry vacuum pump, rotors that suck and discharge an exhaust gas are rotated with rotational power produced by a power source such as an electromagnetic motor, to discharge a gas in a system (see PTL 1, for example).

The development and the manufacture of silicon thin-film solar cells have been increasing in recent years. A general method of manufacturing this type of thin film is to use a plasma CVD technique using silane (SiH₄) and hydrogen gas (H₂) as main material gases, to form amorphous silicon and crystalline silicon thin films on a substrate (see PTL 2, for example).

In order to prevent lubricating oil from flowing out and to prevent a reactant gas from entering between a gear box and an exhaust chamber in the vacuum pump, a passage through which an inert gas etc. flows is provided in a non-contact shaft seal mechanism, in some cases (see PTL 3, for example).

### {Citation List}

### {Patent Literature}

{PTL 1} Japanese Unexamined Patent Application, Publication No. 2005-171766
{PTL 2} Japanese Unexamined Patent Application, Publication No. 2006-216921
{PTL 3} Japanese Unexamined Patent Application, Publication No. 2003-172261

### {Summary of Invention}

### {Technical Problem}

In a plasma CVD apparatus for the above-described thin-film formation, a mixed gas composed of silane gas and hydrogen gas is mainly used as a material gas to form an amorphous silicon film and a crystalline silicon thin film. In a vacuum processing chamber (film forming chamber etc.) of the plasma CVD apparatus, hydrogen gas is generated also through the cracking reaction of silane. Therefore, an exhaust-target gas (exhaust gas) discharged from the vacuum processing chamber includes a large amount of hydrogen gas.

On the other hand, the dry vacuum pump, which is used to suck and discharge the exhaust gas including hydrogen gas from the vacuum processing chamber, has an electromagnetic motor serving as its drive source, and the electromagnetic motor contains a permanent magnet material as a constituent material. As the permanent magnet material, an iron neodymium material is typically used. Because rusting easily occurs on the permanent magnet material due to moisture, the corrosion resistance is improved by nickel plating etc. Further, it is known that, since the permanent magnet material absorbs hydrogen to form a hydrogen compound, it may embrittle through heat generation etc. to cause a reduction in magnetic force or disintegration and is susceptible to so-called hydrogen corrosion. Thus, there is a concern that the excitation power of the electromagnetic motor may be reduced.

Furthermore, it has become clear that, because the hydrogen gas has a small molecular size and easily diffuses, the hydrogen gas passes through a seal portion at a rotary shaft of rotors from an exhaust chamber of the dry vacuum pump, diffuses into the electromagnetic motor, and is further transmitted through pin holes in a thin nickel plating or in a plated layer applied to the surface of the permanent magnet, thus causing hydrogen corrosion.

Therefore, in a case where the dry vacuum pump is used as exhaust means for the vacuum processing chamber (film forming chamber etc.) of the plasma CVD apparatus for thin-film formation, it is a critical issue to avoid malfunction of the permanent magnet material of the electromagnetic motor caused by a large amount of hydrogen gas included in the exhaust-target gas (exhaust gas), and therefore, it is desired to take a countermeasure so as not to bring the permanent magnet material into direct contact with the hydrogen gas.
In particular, when film-formation processing is applied to a substrate with a large area of more than 1 m² under high dilution-ratio film formation conditions in which silane gas is diluted with a large amount of hydrogen gas, as in crystalline silicon thin-film formation, the ratio of hydrogen gas included in the exhaust gas with respect to the amount in the evacuation pump is increased, and therefore, there is a concern that malfunction of the permanent magnet material of the electromagnetic motor may be further caused by the hydrogen gas.

Furthermore, in a vacuum pump, such as that shown in PTL 3, although the passage through which the inert gas flows is provided in the non-contact shaft seal mechanism in order to prevent the reactant gas from entering the gear box from the exhaust chamber, there is a problem in that the introduction of a large amount of inert gas causes an increase in cost and deterioration in the exhaust capability. Furthermore, in order to ensure the sealing property against a pressure fluctuation in the exhaust chamber, the flow rate of the inert gas needs to be increased more and more.
As described above, a contact seal mechanism is employed, and a seal mechanism having a sufficiently superior sealing property against a pressure fluctuation in the exhaust chamber is further desired.

In view of the above-described circumstances, an object of the present invention is to provide a dry vacuum pump capable of preventing malfunction of a drive source (electromagnetic motor) caused by hydrogen gas included in an exhaust-target gas (exhaust gas) guided from a vacuum processing chamber.

### {Solution to Problem}

In order to solve the above-described problems, the dry vacuum pump of the present invention employs the following solutions.

According to a first aspect, the present invention provides a dry vacuum pump including: a shaft that is rotationally driven by an electromagnetic motor; and rotors that are attached to the shaft and provided in an exhaust chamber and that suck an exhaust gas in a vacuum processing chamber into the exhaust chamber and discharge the exhaust gas, the dry vacuum pump evacuating the vacuum processing chamber, in which, between the exhaust chamber and a next chamber located next to the exhaust chamber, an exhaust-chamber-side seal that seals between an exhaust-chamber partitioning wall portion that partitions the exhaust chamber and the shaft and a next-chamber-side seal that seals between a next-chamber partitioning wall portion that partitions the next chamber and the shaft are provided; a gas introduction space to which a seal gas is supplied is provided between the exhaust-chamber-side seal and the next-chamber-side seal; the exhaust-chamber-side seal and the next-chamber-side seal each have a ring-like base part that is fixed to the exhaust-chamber partitioning wall portion or the next-chamber partitioning wall portion and a pair of ring-like lip parts that extends from the base part toward the shaft; and the pair of lip parts extends such that the distance therebetween is gradually increased from the base part toward the shaft, and the tips of the pair of lip parts can be brought into elastic contact with the shaft.

The exhaust-chamber-side seal and the next-chamber-side seal are provided between the exhaust chamber and the next chamber, and a seal gas is supplied between the seals. The seal gas blows out from the exhaust-chamber-side seal toward the exhaust chamber and also from the next-chamber-side seal toward the next chamber. Thus, the exhaust gas in the exhaust chamber can be prevented from leaking into the next chamber, and a substance (for example, lubricating oil or its mist) in the next chamber can be prevented from leaking into the exhaust chamber.
Furthermore, the exhaust-chamber-side seal and the next-chamber-side seal each include a pair of lip parts, and the tips of the lip parts can be brought into elastic contact with the shaft. Therefore, more reliable sealing can be performed with the two lip parts.
Furthermore, each pair of lip parts has a shape in which the lip parts extend such that the distance therebetween is gradually increased toward the shaft, and the lip parts are connected to the base part, which is regarded as a common part. Therefore, when one of the lip parts is inclined with respect to the base part, the other lip part is also inclined via the base part and is inclined in the same direction. Specifically, when the lip part that faces the exhaust chamber or the next chamber is inclined so as to move away from the shaft, the lip part that faces the gas introduction space, to which a seal gas is supplied, moves toward the shaft, accordingly. Conversely, when the lip part that faces the exhaust chamber or the next chamber is inclined so as to move toward the shaft, the lip part that faces the gas introduction space, to which a seal gas is supplied, moves away from the shaft, accordingly. In this way, even when one lip part moves away from the shaft to increase the gap therebetween, the other lip part, located corresponding to the circumferential positions of this lip part, moves toward to the shaft to reduce the gap therebetween; thus, the seal gas outflow is adjusted such that the unevenness at the circumferential positions is corrected. Therefore, even if a pressure distribution occurs in the circumferential direction of the seal, the seal-gas flow rate is adjusted at the respective circumferential positions, and thus, a high sealing performance is exerted.

Note that, in the present invention, the "next chamber" means a chamber located next to the exhaust chamber and can be, for example, a lubrication chamber or a bearing chamber. Therefore, the present invention is appropriate for a seal between the exhaust chamber and the lubrication chamber or a seal between the exhaust chamber and the bearing chamber.

In the dry vacuum pump according to the first aspect of the present invention, it is assumed that an electromagnetic motor chamber that accommodates the electromagnetic motor is provided at a position where it sandwiches the next chamber with the exhaust chamber; the next chamber is a lubrication chamber in which lubricating oil is stored; and the exhaust gas includes hydrogen gas.

Hydrogen gas corrodes the permanent magnet material of the electromagnetic motor to degrade the magnetic performance. In the present invention, since the exhaust-chamber-side seal and the next-chamber-side seal of the above-described invention are provided between the exhaust chamber and the next chamber (lubrication chamber), the exhaust gas is prevented from leaking into the electromagnetic motor chamber, which is located at the opposite side of the next chamber (lubrication chamber) from the exhaust chamber. Therefore, it is possible to avoid a situation in which the permanent magnet of the electromagnetic motor is corroded by hydrogen gas.

Furthermore, in the dry vacuum pump according to the first aspect of the present invention, it is preferable that the base part and the pair of lip parts be integrally structured.

Since the base part and the pair of lip parts are integrally structured, handling and maintenance become easy.

Furthermore, in the dry vacuum pump according to the first aspect of the present invention, it is preferable that the pair of lip parts be formed as individual members, and the base ends of the lip parts be fixedly combined to form the base part.

Since the pair of lip parts is formed as individual members, each lip part is easily manufactured, and even a lip part having a complicated shape can be manufactured, thus realizing a reduction in cost.

Furthermore, in the dry vacuum pump according to the first aspect of the present invention, it is preferable that portions of the lip parts that are brought into contact with the shaft be made of polytetrafluoroethylene.

Since the portions of the lip parts that are brought into contact with the shaft are made of polytetrafluoroethylene, a friction coefficient with respect to the shaft is reduced, and the wear amount of the sliding portions of the lip parts can be reduced. As a result, the reliability of the seals can be ensured for a long period.

According to a second aspect of the present invention, there is provided a dry vacuum pump including: an electromagnetic motor that is accommodated in an electromagnetic motor chamber; a shaft that is rotationally driven by the electromagnetic motor; and rotors that are attached to the shaft and provided in an exhaust chamber and that suck an exhaust gas including hydrogen gas in a vacuum processing chamber into the exhaust chamber and discharge the exhaust gas including hydrogen gas, the dry vacuum pump evacuating the vacuum processing chamber, in which purge means for introducing an inert gas into the electromagnetic motor chamber and for discharging a gas in the electromagnetic motor chamber is provided.

Hydrogen gas corrodes the permanent magnet material of the electromagnetic motor to degrade the magnetic performance. When the exhaust gas includes hydrogen gas, there is a concern that hydrogen may enter the electromagnetic motor chamber from the exhaust chamber because the exhaust chamber and the electromagnetic motor chamber are connected via the shaft.
In the dry vacuum pump according to the second aspect of the present invention, the purge means for introducing an inert gas into the electromagnetic motor chamber and for discharging a gas in the electromagnetic motor chamber is provided. Thus, even if hydrogen gas enters the electromagnetic motor chamber, the hydrogen gas can be discharged, and, since the introduction of the inert gas reduces the partial pressure of the hydrogen gas, the permanent magnet material of the electromagnetic motor is not corroded by a large amount of hydrogen. Therefore, it is possible to avoid a situation in which the permanent magnet of the electromagnetic motor is corroded by hydrogen gas.

In the dry vacuum pump according to the second aspect of the present invention, it is preferable that a lubrication chamber in which lubricating oil is stored be provided between the exhaust chamber and the electromagnetic motor chamber; and the inert gas introduced into the electromagnetic motor chamber by the purge means be discharged through the lubrication chamber.

The exhaust gas including hydrogen gas first enters the lubrication chamber, located next to the exhaust chamber. In the lubrication chamber, an inert gas guided from the electromagnetic motor chamber is introduced and discharged. In this way, the hydrogen gas meets the inert gas in the lubrication chamber and is discharged before entering the electromagnetic motor chamber. Therefore, it is possible to prevent the hydrogen gas from entering the electromagnetic motor chamber as much as possible.

According to a third aspect of the present invention, there is provided a dry vacuum pump including: an electromagnetic motor that is accommodated in an electromagnetic motor chamber; a shaft that is rotationally driven by the electromagnetic motor; rotors that are attached to the shaft and provided in an exhaust chamber and that suck an exhaust gas including hydrogen gas in a vacuum processing chamber into the exhaust chamber and discharge the exhaust gas including hydrogen gas; and a lubrication chamber that is provided between the exhaust chamber and the electromagnetic motor chamber and in which lubricating oil is stored, the dry vacuum pump evacuating the vacuum processing chamber, in which purge means for introducing an inert gas into the lubrication chamber from outside the electromagnetic motor chamber through a gas introduction passage formed in the shaft and for discharging a gas in the lubrication chamber is provided.

Hydrogen gas corrodes the permanent magnet material of the electromagnetic motor to degrade the magnetic performance. When the exhaust gas includes hydrogen gas, there is a concern that hydrogen may enter the electromagnetic motor chamber from the exhaust chamber via the lubrication chamber because the exhaust chamber, the lubrication chamber, and the electromagnetic motor chamber are connected via the shaft.
In the dry vacuum pump according to the third aspect of the present invention, the purge means for introducing an inert gas into the lubrication chamber from the outside of the electromagnetic motor chamber through the gas introduction passage formed in the shaft and that discharges a gas in the lubrication chamber is provided. Thus, even if hydrogen gas enters the lubrication chamber from the exhaust chamber, the hydrogen gas can be discharged before entering the electromagnetic motor chamber, and, since the introduction of the inert gas reduces the partial pressure of the hydrogen gas, the permanent magnet material of the electromagnetic motor is not corroded by a large amount of hydrogen. Therefore, it is possible to avoid a situation in which the permanent magnet of the electromagnetic motor is corroded by hydrogen gas.
Furthermore, since an inert gas is introduced into the lubrication chamber from the outside of the electromagnetic motor chamber through the gas introduction passage formed in the shaft, piping drawing around the electromagnetic motor chamber is unnecessary to introduce the inert gas into the lubrication chamber, thus realizing a simple configuration.

In the dry vacuum pump according to the second aspect or the third aspect of the present invention, it is preferable that the purge means include a gas discharge passage that is connected to an exhaust line to which the exhaust gas is discharged from the exhaust chamber, and a check valve that permits a flow of gas flowing toward the exhaust line and prohibits a flow in the opposite direction be provided in the gas discharge passage.

By providing the check valve, it is possible to prevent the exhaust gas discharged from the exhaust chamber to the exhaust line from entering the lubrication chamber or the electromagnetic motor chamber via the gas discharge passage.

Furthermore, in the dry vacuum pump according to the second aspect or the third aspect of the present invention, it is preferable that the purge means include a gas discharge passage that is connected to an exhaust line to which the exhaust gas is discharged from the exhaust chamber, and an oil trap that traps the lubricating oil flowing toward the exhaust line be provided in the gas discharge passage.

By providing the oil trap, it is possible to prevent the lubricating oil from leaking into the exhaust line together with the purge gas and to maintain a clean exhaust system.

### {Advantageous Effects of Invention}

According to the dry vacuum pump of the present invention, since the exhaust-chamber-side seal and the next-chamber-side seal are provided between the exhaust chamber and the next chamber, and a seal gas is supplied between the seals, it is possible to prevent the exhaust gas in the exhaust chamber from leaking into the next chamber and to prevent a substance (for example, the lubricating oil or its mist) in the next chamber from leaking into the exhaust chamber.
Furthermore, since the exhaust-chamber-side seal and the next-chamber-side seal each have a pair of lip parts, and the tips of the lip parts can be brought into elastic contact with the shaft, more reliable sealing can be performed with the two lip parts.
Furthermore, since each pair of lip parts has a shape in which the lip parts extend such that the distance therebetween is gradually increased toward the shaft, and the lip parts are connected to the base part, which is regarded as a common part, even if a pressure distribution occurs in the circumferential direction of the seal, since the seal-gas flow rate is adjusted such that the unevenness thereof at the circumferential positions is corrected, a high sealing performance is exerted.
Furthermore, since the exhaust-chamber-side seal and the next-chamber-side seal are provided between the exhaust chamber and the lubrication chamber, the exhaust gas is prevented from leaking into the electromagnetic motor chamber, which is located at the opposite side of the lubrication chamber from the exhaust chamber. Therefore, it is possible to avoid a situation in which the permanent magnet of the electromagnetic motor is corroded by hydrogen gas.

Alternatively, according to the dry vacuum pump of the present invention, since the purge means for introducing an inert gas into the electromagnetic motor chamber and for discharging a gas in the electromagnetic motor chamber is provided, it is possible to avoid a situation in which the permanent magnet of the electromagnetic motor is corroded by hydrogen gas and to prevent malfunction of the electromagnetic motor.

### {Brief Description of Drawings}

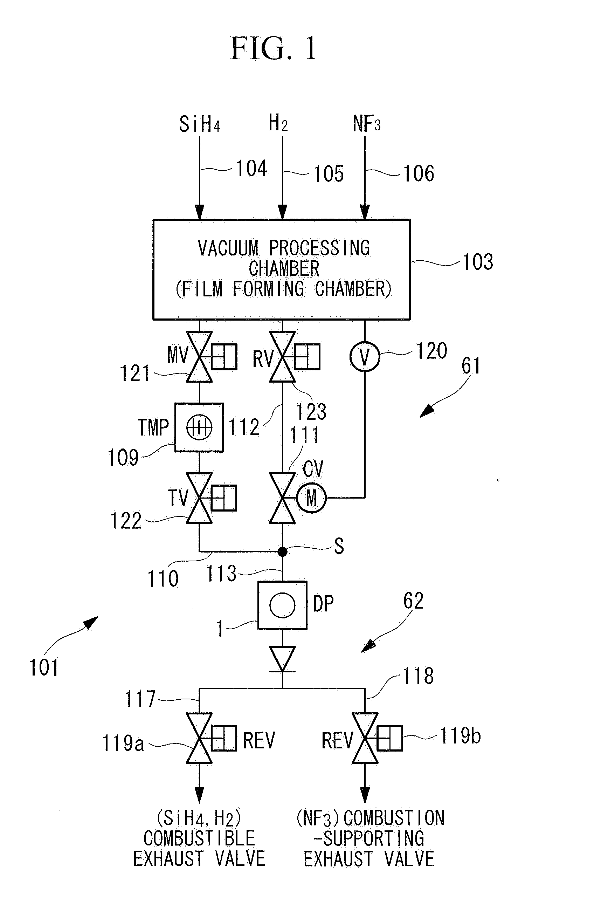

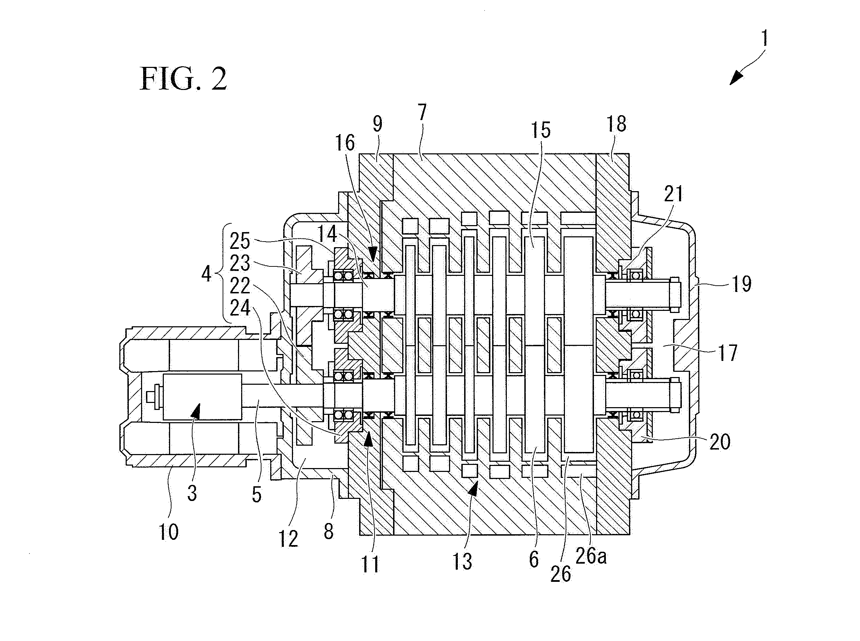

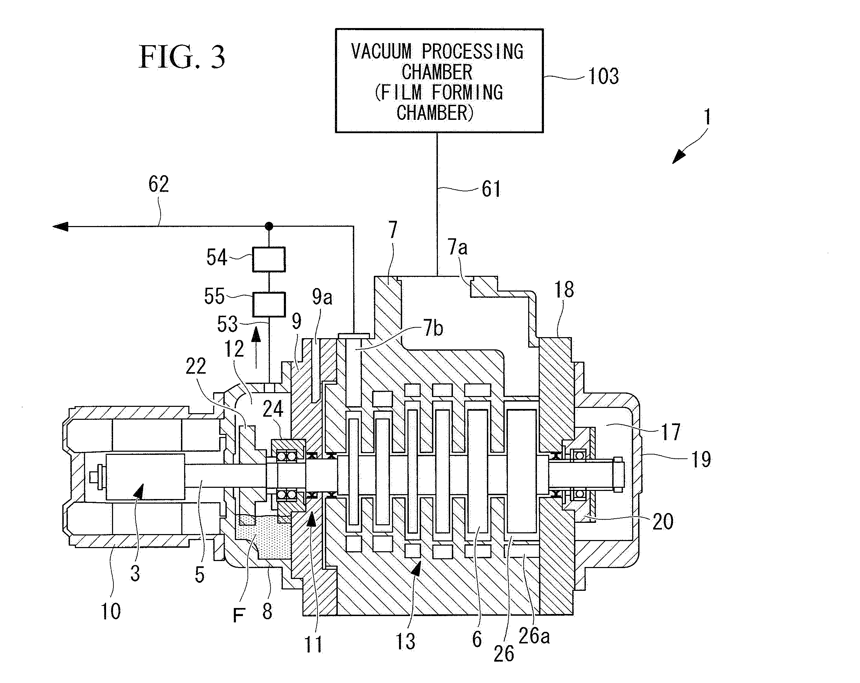

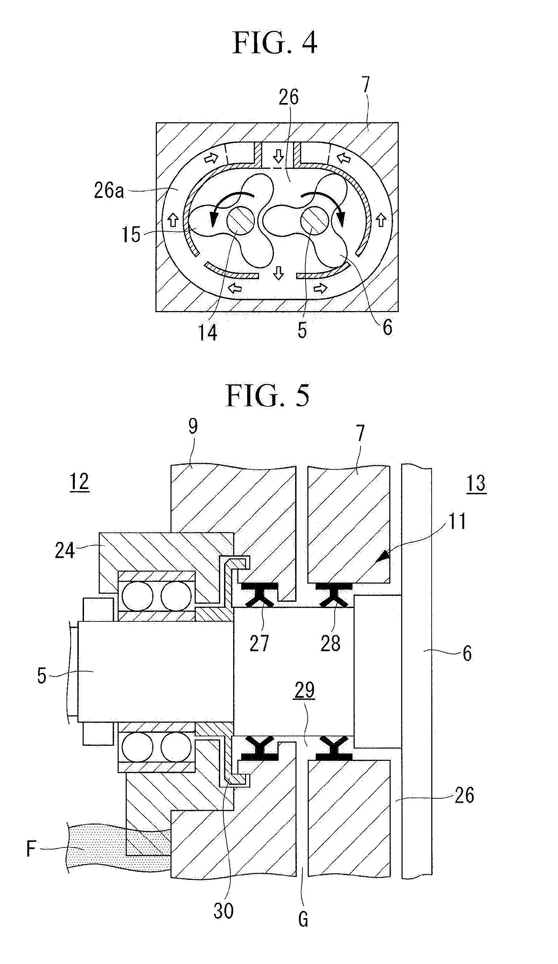

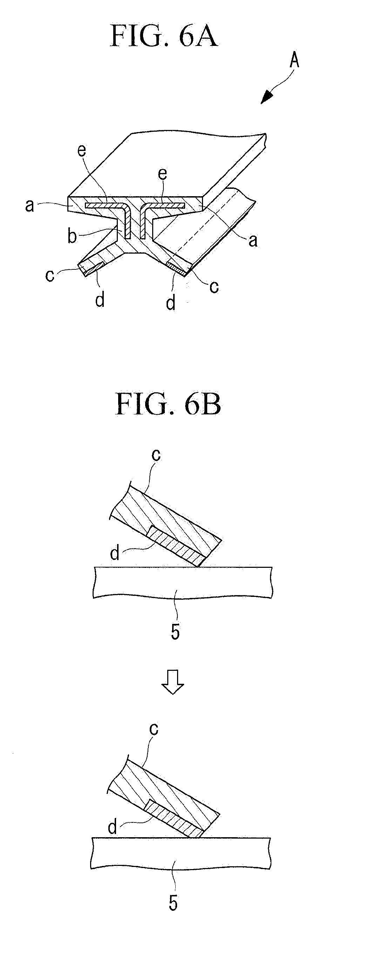

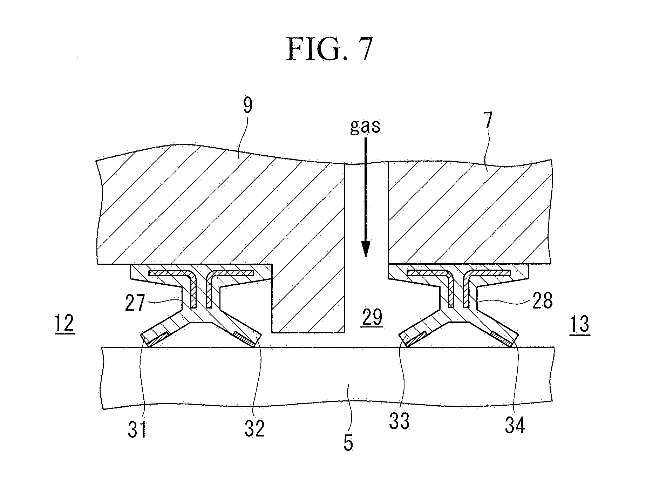

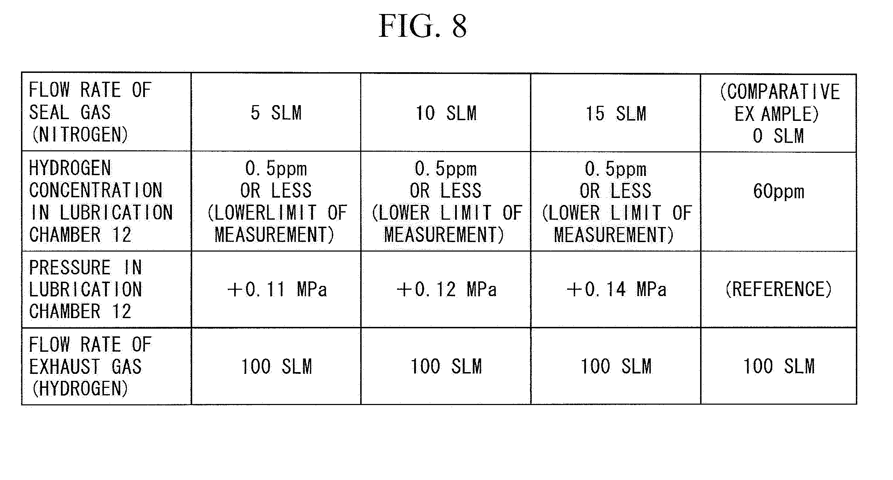

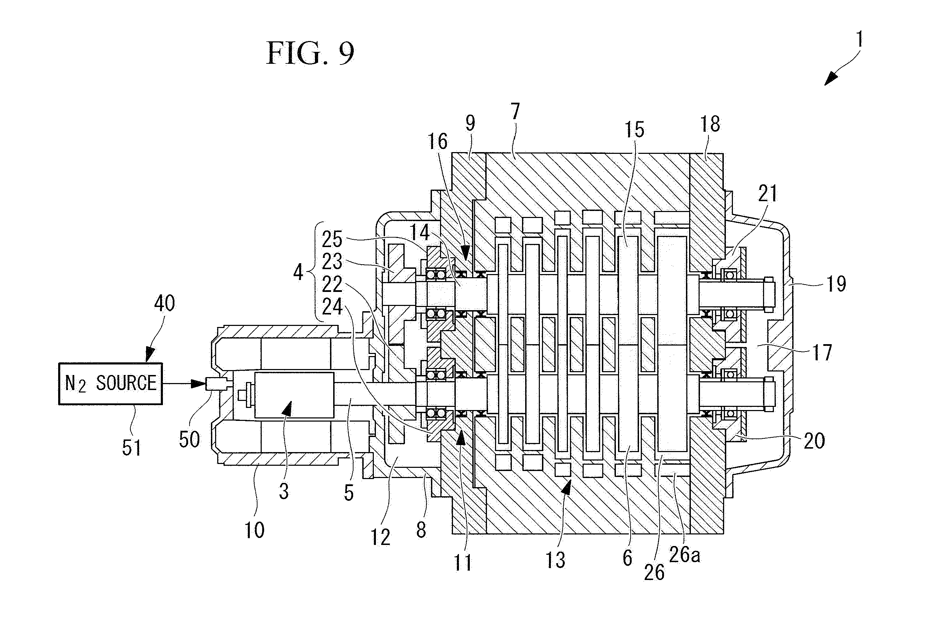

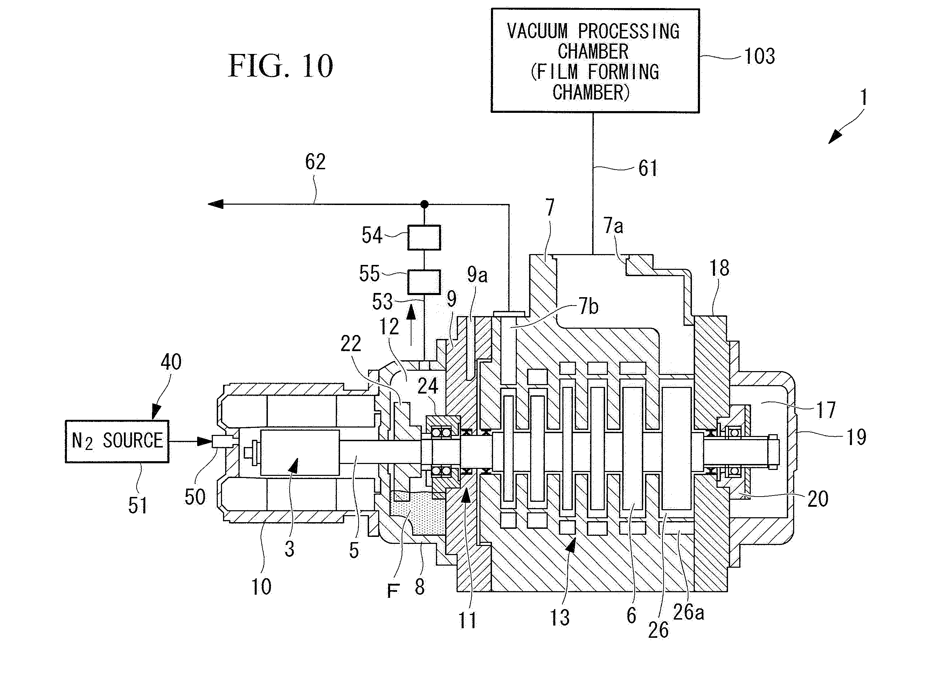

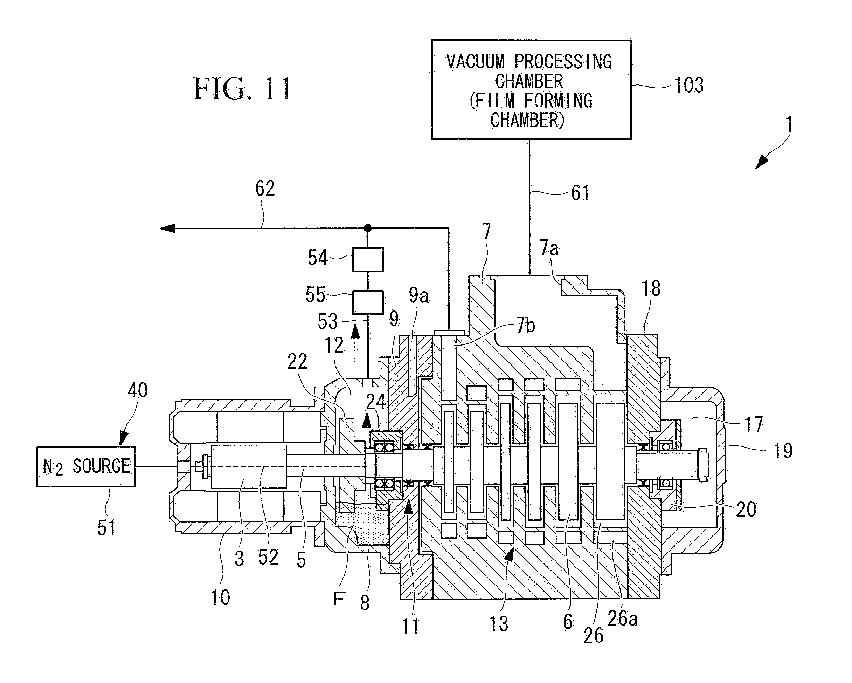

{Fig. 1} Fig. 1 is a configuration diagram showing, in outline, a vacuum processing system in which a dry vacuum pump according to a first embodiment of the present invention is used.
{Fig. 2} Fig. 2 is a sectional plan view showing the internal structure of the dry vacuum pump shown in Fig. 1.
{Fig. 3} Fig. 3 is a sectional side view showing the internal structure of the dry vacuum pump shown in Fig. 1.
{Fig. 4} Fig. 4 is a sectional view showing the structure of an exhaust chamber of the dry vacuum pump shown in Fig. 1.
{Fig. 5} Fig. 5 is an enlarged sectional view showing details of cup seals of the dry vacuum pump shown in Fig. 1.
{Fig. 6A} Fig. 6A is a sectional perspective view showing the structure of a seal member constituting the cup seal shown in Fig. 5.
{Fig. 6B} Fig. 6B is a sectional view showing the operation of a main portion of the seal member.
{Fig. 7} Fig. 7 is an enlarged sectional view showing details of the cup seals in Fig. 5.
{Fig. 8} Fig. 8 is a table showing a result of a test of ingress of hydrogen gas into a lubrication chamber, based on the seal-gas flow rate.
{Fig. 9} Fig. 9 is a sectional plan view showing the internal structure of a dry vacuum pump according to a second embodiment of the present invention.
{Fig. 10} Fig. 10 is a sectional side view showing the internal structure of the dry vacuum pump shown in Fig. 9.
{Fig. 11} Fig. 11 is a sectional side view showing the internal structure of a dry vacuum pump according to a third embodiment of the present invention.

### {Description of Embodiments}

Embodiments of the present invention will be described below with reference to the drawings.

### First Embodiment

Fig. 1 shows the outline of a vacuum processing system using a dry vacuum pump 1 according to a first embodiment of the present invention.
A plasma CVD apparatus (vacuum processing apparatus) 101 includes a film forming chamber 103, and the dry vacuum pump 1 is provided in a system for evacuating the film forming chamber 103. In the film forming chamber 103, film formation is applied to a glass substrate with a large area of more than 1 m² (not shown). The film forming chamber 103 is connected to gas supply flow paths 104, 105, and 106 that supply silane gas (SiH₄) and hydrogen gas (H₂), which are the main material gases, and the cleaning gas (NF₃), respectively, to the film forming chamber 103. The film forming chamber 103 is provided with an exhaust system 61 that discharges the gas.
The exhaust system 61 includes an exhaust flow path 110 provided with a high-vacuum turbo-molecular pump (TMP) 109 and a flow path 112 provided with a flow control valve (CV) 111. The dry vacuum pump (DP) 1 is provided in a flow path 113 located downstream of a junction S of the exhaust flow path 110 and the flow path 112. Further, an exhaust line 62 is provided at a downstream side of the dry vacuum pump 1. The exhaust line 62 is branched into a combustible exhaust line 117 through which a combustible gas, such as silane gas and hydrogen gas, is discharged and a combustion-supporting exhaust line 118 through which a combustion-supporting gas, such as nitrogen trifluoride gas (NF₃), is discharged. A combustible exhaust valve 119a is provided in the combustible exhaust line 117, and a combustion-supporting exhaust valve 119b is provided in the combustion-supporting exhaust line 118.
To supply silane gas and hydrogen gas that are used as material gases in order to perform film formation, the combustible exhaust line 117 is used with the combustible exhaust valve 119a opened and the combustion-supporting exhaust valve 119b closed.
To supply nitrogen trifluoride gas that is used as a cleaning gas in order to perform self-cleaning of the film forming chamber 103, the combustion-supporting exhaust line 118 is used with the combustible exhaust valve 119a closed and the combustion-supporting exhaust valve 119b opened.
The plasma CVD apparatus 101 is provided with a vacuum gauge (V) 120 that measures the pressure in the film forming chamber 103.

In the thus-configured plasma CVD apparatus 101, a film-formation gas including a material gas composed of SiH₄ is supplied to the film forming chamber 103 that has been decompressed from atmospheric pressure while rough evacuation is performed by the dry vacuum pump 1, plasma is produced by high-frequency power supplied from a high-frequency power source (not shown), and film formation is applied to a substrate, made of glass etc., supported and heated in the film forming chamber 103. As the substrate, a glass substrate with a large area of more than 1 m² can be used, for example.
The material gas is diluted with hydrogen gas. For example, to form a crystalline silicon film, the material gas is diluted with 20 times or greater volume of hydrogen gas than that of the silane gas, thereby improving the film quality.

Upon reception of an instruction to perform film-formation processing, the plasma CVD apparatus 101 performs high evacuation by using the turbo-molecular pump 109 and the dry vacuum pump 1 with an MV 121 and a TV 122 opened and an RV 123 closed.
The substrate (not shown) is set in the film forming chamber 103, a film-formation recipe is instructed, and the film-formation processing is performed according to the film-formation recipe.
For example, in forming the crystalline silicon film, in order to obtain a film-formation speed of 2.0 to 2.5 nm/s, the film-formation pressure is set to 1000 to 3000 Pa, the flow rate of silane gas used as a film-formation material gas is set to 0.5 to 2.0 SLM/m² per 1 m² of the substrate, and the flow rate of hydrogen gas is set to 10 SLM/m² or more, which is a large flow rate.

Next, with the MV 121 and the TV 122 closed and the RV 123 opened, the film-formation material gas is introduced into the film forming chamber 103 while roughing evacuation is performed by the dry vacuum pump 1. The flow control valve (CV) 111 is adjusted such that the pressure in the film forming chamber 103 measured by the vacuum gauge (V) 120 becomes equal to the instructed value of the pressure specified in the film-formation recipe for the film forming chamber 103, to adjust the pressure in the film forming chamber 103.
Next, plasma discharge is started, thereby applying film formation.
After a predetermined film formation has been applied, the plasma discharge is stopped, and the supply of the film-formation material gas is stopped. With the MV 121 and the TV 122 opened and the RV 123 closed, high evacuation is performed by the turbo-molecular pump 109 and the dry vacuum pump 1, and the substrate to which the film-formation processing has been applied is taken out to finish the film-formation processing.
Note that the dry vacuum pump 1 may be used with its evacuation capability being improved by serially combining a mechanical booster pump, such as a roots-type pump, and the exhaust system.

Fig. 2 is a sectional plan view of the dry vacuum pump 1 of this embodiment, seen from the top. Fig. 3 is a sectional side view of the dry vacuum pump 1 seen from a lateral side.
Although the dry vacuum pump 1 of this embodiment is configured as a roots-type dry vacuum pump, the present invention is not limited thereto and can also be used for dry vacuum pumps of other types, such as a scroll type and a rotary vane type, or a mechanical booster pump, such as a roots-type pump.

As shown in the figures, the dry vacuum pump 1 includes an electromagnetic motor 3 serving as a drive source, a lubrication chamber (next chamber) 12 disposed laterally to the electromagnetic motor 3, an exhaust chamber 13 disposed laterally to the lubrication chamber 12, and a first seal mechanism 11 disposed between the lubrication chamber 12 and the exhaust chamber 13.

The lubrication chamber 12 is formed by a motor cover (next-chamber partitioning wall portion) 8 and a side cover 9, and the exhaust chamber 13 is formed by a cylinder (exhaust-chamber partitioning wall portion) 7 and the side cover 9. The lubrication chamber 12 and the exhaust chamber 13 constitute a main chassis portion of the dry vacuum pump 1.

The lubrication chamber 12 accommodates a rotation transfer mechanism 4, and the exhaust chamber 13 accommodates first rotors (rotors) 6. The electromagnetic motor 3 is disposed adjacent to the motor cover 8. The rotational axis of the electromagnetic motor 3 is connected to a first shaft (shaft) 5. The first shaft 5 longitudinally passes through the lubrication chamber 12, passes through the side cover 9, and extends to the exhaust chamber 13. A portion where the first shaft 5 makes the lubrication chamber 12 communicate with the exhaust chamber 13 is sealed by the first seal mechanism 11 so as to suppress the movement of a gas between the lubrication chamber 12 and the exhaust chamber 13 caused by the rotation of the first shaft 5. In the lubrication chamber 12, the rotation transfer mechanism 4 is connected to the first shaft 5. In the exhaust chamber 13, the first rotors 6 are connected to the first shaft 5. The lubrication chamber 12 accommodates lubricating oil F (see Fig. 3) used to lubricate the rotation transfer mechanism 4.

The dry vacuum pump 1 of this embodiment includes, in addition to the above-described components, a second shaft (shaft) 14, second rotors (rotors) 15, and a second seal mechanism 16 (see Fig. 2). The second shaft 14 is connected to the rotation transfer mechanism 4 in the lubrication chamber 12, passes through the side cover 9, and extends to the exhaust chamber 13, in parallel to the first shaft 5. A portion where the second shaft 14 makes the lubrication chamber 12 communicate with the exhaust chamber 13 is sealed by the second seal mechanism 16 so as to suppress the movement of a gas between the lubrication chamber 12 and the exhaust chamber 13 caused by the rotation of the second shaft 14. In the exhaust chamber 13, the second rotors 15 are connected to the second shaft 14.

Furthermore, the dry vacuum pump 1 of this embodiment includes a bearing chamber 17 at the other side (right side in Fig. 2) of the exhaust chamber 13 from the lubrication chamber 12. The bearing chamber 17 is formed by a second side cover 18 that is attached to the other side of the cylinder 7 from the side cover 9 and a bearing cover 19 that is attached to the second side cover 18. The first shaft 5 and the second shaft 14 pass through the second side cover 18 and are rotatably supported in the bearing chamber 17. The bearing chamber 17 accommodates a first bearing 20 that rotatably supports the first shaft 5 and a second bearing 21 that rotatably supports the second shaft 14. The first bearing 20 and the second bearing 21 are ball bearings, for example.

The electromagnetic motor 3 is accommodated in an electromagnetic motor chamber 10 and produces rotational power for rotating the first rotors 6. The electromagnetic motor 3 can have the general structure of a power source of the dry vacuum pump 1. The electromagnetic motor 3 typically has a stator and a rotor, and a permanent magnet material is used for either the stator or the rotor. It is preferable that the permanent magnet material be relatively inexpensive and have superior magnetic properties. For example, a rare-earth magnet is used. As the permanent magnet material, a rare-earth iron magnetic material, such as iron neodymium, is used, for example. A layer plated with metal, such as nickel, is applied to the magnet surface in order to improve durability against rusting, erosion, and corrosion that occurs when a hydrogen compound that absorbs hydrogen is formed.
As shown in Fig. 2 and Fig. 3, the electromagnetic motor 3 and the lubrication chamber 12 are provided at a side where gas is compressed in exhaust spaces 26 of the exhaust chamber 13 (side where the pressure is closer to the atmospheric pressure). With the electromagnetic motor 3 being disposed in this way, the air tightness of the electromagnetic motor chamber 10 can be easily managed. Further, there is an effect of making the sealing property in the first seal mechanism 11 more reliable because the lubrication chamber 12 and the exhaust chamber 13 have a small pressure difference when a pressure fluctuation occurs at the start or stop of the dry vacuum pump 1.
Note that the number of electromagnetic motors 3 is not limited to one, and a plurality of electromagnetic motors 3 may be provided.

The rotation transfer mechanism 4 is lubricated with the lubricating oil F, transfers the rotational power produced by the electromagnetic motor 3 to the first shaft 5 and the second shaft 14, and makes the first rotors 6 and the second rotors 15 rotate synchronously in directions opposite to each other. The rotation transfer mechanism 4 includes a first timing gear 22, a second timing gear 23, a first bearing 24, and a second bearing 25. The first timing gear 22 is attached to the first shaft 5 and transfers the rotational power to the second timing gear 23. The first bearing 24 includes an outer ring fixed to the side cover 9, an inner ring fixed to the first shaft 5, and bearing balls arranged therebetween, and rotatably supports the first shaft 5 in the side cover 9. The second timing gear 23 is attached to the second shaft 14, receives the rotational power from the first timing gear 22, and rotates the second shaft 14. The second bearing 25 includes an outer ring fixed to the side cover 9, an inner ring fixed to the second shaft 14, and bearing balls arranged therebetween, and rotatably supports the second shaft 14 in the side cover 9. The configuration of the rotation transfer mechanism 4 is not limited thereto, and a reduction gear etc. may be included, for example.

Through the rotation of the first rotors 6 and the second rotors 15, an exhaust gas is sucked and discharged. Fig. 4 is a sectional side view showing the structures of each of the first rotors 6 and each of the second rotors 15. As shown in Fig. 2 and Fig. 3, the first rotors 6 are serially arrayed along the first shaft 5 at multiple stages (six stages in the example shown in the figure), and the second rotors 15 are serially arrayed along the second shaft 14 at multiple stages (six stages in the example shown in the figure).

The first rotors 6 arrayed at the respective stages and the second rotors 15 arrayed at the corresponding stages are disposed in pairs. The first rotors 6 and the second rotors 15 are each formed in a three-lobed shape, and, when the first shaft 5 and the second shaft 14 rotate, the first rotors 6 and the second rotors 15, in pairs, can be rotated with a minute space provided therebetween.

The first rotor 6 and the second rotor 15, in pair, are disposed in each of the six exhaust spaces 26 formed in the cylinder 7, and the exhaust spaces 26 are connected by exhaust passages 26a that sequentially communicate with the exhaust spaces disposed at the stages immediately after. The exhaust space 26 that is provided at the foremost stage (uppermost- stream stage) is connected to an air-intake hole 7a formed in the cylinder 7, and the exhaust space 26 that is provided at the last stage (lowermost-stream stage) is connected to an exhaust hole 7b formed in the cylinder 7 (see Fig. 3).

The air-intake hole 7a is connected to the film forming chamber 103 of the plasma CVD apparatus, serving as a vacuum processing chamber for thin-film formation, via the exhaust system 61. The exhaust hole 7b is connected to the exhaust line 62. The film forming chamber 103 is configured as a film forming chamber used to form an amorphous silicon film and a crystalline silicon film on a substrate. In the film forming chamber 103, a film-formation gas including material gases mainly composed of silane gas (SiH₄) and hydrogen gas (H₂) is supplied to the film forming chamber that has been decompressed from atmospheric pressure while roughing evacuation is performed by the dry vacuum pump 1, plasma is produced by high-frequency power supplied from a high-frequency power source (not shown), and film formation is applied to a substrate, made of glass etc., supported and heated in the film forming chamber 103. At this time, because silane gas (SiH₄) is cracked and a large amount of hydrogen gas (H₂) is supplied to the film forming chamber 103, a great amount of hydrogen gas is discharged to the exhaust line 62 with the dry vacuum pump 1.
Since a large amount of hydrogen gas (H₂) is also supplied to a substrate preheating chamber, in addition to the film forming chamber 103, the dry vacuum pump 1 of this embodiment can be used in the same way.

For example, to form a crystalline silicon film, the distance d between a plasma discharge electrode that supplies a high-frequency power of 40 MHz to 100 MHz and the surface of the substrate is set to 3 mm to 10 mm, and a material gas that is obtained by dilution with 20 times or greater volume of hydrogen gas than that of the silane gas is supplied, thereby realizing improved film-formation speed and improved film quality. When the crystalline silicon film is formed on a substrate having a large area of more than 1 m², in order to obtain a film-formation speed of 2.0 to 2.5 nm/s, the film-formation pressure is set to 1000 to 3000 Pa, the flow rate of silane gas used as a material gas for film formation is set to 0.5 to 2.0 SLM/m² per 1 m² of the substrate, and the flow rate of hydrogen gas needs to be 20 SLM/m² or more, specifically, about 20 to 100 SLM/m². Because part of the silane gas is used for film formation, and hydrogen gas generated by cracking the silane gas is also added, the flow rate of hydrogen gas to be discharged to the exhaust line 62 is further increased, and the partial pressure of hydrogen gas in the exhaust gas is extremely high.

The first seal mechanism 11 and the second seal mechanism 16 seal the ingress of the lubricating oil F and the exhaust gas at the portions where the first shaft 5 and the second shaft 14 make the lubrication chamber 12 communicate with the exhaust chamber 13. A gas introduction hole 9a that is used to supply a seal gas to these portions is formed in the side cover 9.

Next, the first seal mechanism 11 and the second seal mechanism 16 will be described.
Since the first seal mechanism 11 and the second seal mechanism 16 have the same structure, the first seal mechanism 11 will be described.
Fig. 5 is a sectional view showing the structure of the first seal mechanism 11 and is an enlarged view of the vicinity of the first seal mechanism 11 shown in Fig. 3.

As shown in the figure, the first seal mechanism 11 has a first seal (lubrication-chamber-side seal) 27 and a second seal (exhaust-chamber-side seal) 28. The first seal 27 is disposed between the side cover 9 and the first shaft 5, and the second seal 28 is disposed between the cylinder 7 and the first shaft 5.
A gap G communicating with the gas introduction hole 9a is formed between the cylinder 7 and the side cover 9, and a gas introduction space 29 is formed by the first seal 27 and the second seal 28. In the dry vacuum pump 1 of this embodiment, portions of the side cover 9 and the cylinder 7 that face the gas introduction space 29 serve as partition walls.
In addition to the above-described components, the first seal mechanism 11 has a slinger 30 attached to the first shaft 5 in the lubrication chamber 12.

The first seal 27 and the second seal 28 have the same structure and are each configured by a seal member A shown in Fig. 6A, for example. Fig. 6A is a perspective view showing the structure of the seal member A. The seal member A is configured by a ring-like cup seal (lip seal) of which an inner circumferential portion is brought into elastic contact with the outer circumference of the shaft 5.

As shown in Fig. 6A, the seal member A includes a fixed part a, a base part b, and two lip parts c. The fixed part a is formed at the outer circumference side of the ring-like seal member A, the base part b is formed so as to protrude from the fixed part a in the radial direction of the ring, and the two lip parts c are formed so as to protrude from the base part b in two oblique directions with respect to the radial direction (such that they form an inverted V-shape). Specifically, the pair of lip parts c has a structure in which they project in opposite directions from each other, along the axial direction of the first shaft 5. The lip parts c can be elastically deformed such that the lip parts c become closer to each other or away from each other.
Note that the seal member A may be constituted by a plurality of members.

The fixed part a, the base part b, and the lip parts c are made of a material, such as a fluoro-rubber, having elasticity and a tolerance to the lubricating oil F and the exhaust gas including hydrogen.
The seal member A further includes sliding members d that are disposed on the lip parts c at portions that are brought into contact with the first shaft 5 and supporting members e that are inserted into the fixed part a and the base part b.

The sliding members d are made of a material, such as polytetrafluoroethylene, having a friction coefficient lower than that of the lip parts c, reduces the contact resistance of the seal member A and the first shaft 5, and makes uniform the gaps formed with respect to the first shaft 5. Because of the low friction coefficient, the wear amount of the sliding members d can be reduced, and the reliability can be ensured for a long period, which are preferable. Fig. 6B is a view showing the structure of one of the sliding members d. As shown in the figure, after the seal member A is attached to the dry vacuum pump 1 as the first seal 27 and the second seal 28, when the dry vacuum pump 1 is idled, the sliding members d slide on the shaft 5 and are used in a state where the corner portion of each sliding member d, the corner portion having a high surface pressure, is made flat, as shown in the lower figure.

The supporting members e are made of metal, for example, and keep the strength and the shape of the seal member A. Note that the supporting members e may be omitted.

Fig. 7 is a longitudinal sectional view showing the arrangement of the first seal 27 and the second seal 28.
As shown in the figure, the first seal 27 is disposed between the side cover 9 and the first shaft 5 and mainly has a function of controlling the leakage of the lubricating oil F (or its mist) from the lubrication chamber 12 into the exhaust chamber 13. The second seal 28 is disposed between the cylinder 7 and the first shaft 5 and mainly has a function of controlling the ingress of the exhaust gas (in particular, hydrogen gas) from the exhaust chamber 13 into the lubrication chamber 12.

The fixed part a of the first seal 27 is fixed to the side cover 9, and the fixed part a of the second seal 28 is fixed to the cylinder 7. The lip parts c of each of the first seal 27 and the second seal 28 are brought into elastic contact with the first shaft 5.

Of the two lip parts c of the first seal 27, the lip part c that faces the lubrication chamber 12 is referred to as a first lip 31, and the lip part c that faces the gas introduction space 29 is referred to as a second lip 32. Of the two lip parts c of the second seal 28, the lip part c that faces the gas introduction space 29 is referred to as a third lip 33, and the lip part c that faces the exhaust chamber 13 is referred to as a fourth lip 34.

The first lip 31 can be elastically deformed toward the first shaft 5 when the pressure in the lubrication chamber 12 is higher than that in the gas introduction space 29 and elastically deformed away from the first shaft 5 when the pressure in the lubrication chamber 12 is lower than that of the gas introduction space 29. Similarly, the second lip 32, the third lip 33, and the fourth lip 34 can be elastically deformed toward the first shaft 5 when the pressure in a space that the corresponding lip faces is relatively high and elastically deformed away from the first shaft 5 when the pressure therein is relatively low.

The slinger 30 rotates together with the first shaft 5 and suppresses a situation in which the lubricating oil F, which is liquid, centrifugally reaches the first seal 27. Note that provision of the slinger 30 is optional.

The dry vacuum pump 1 of this embodiment is configured as described above. Next, the operation of the dry vacuum pump 1 will be described.

When the electromagnetic motor 3 starts rotating, the first shaft 5 connected to the electromagnetic motor 3 rotates, and the first timing gear 22 rotates accordingly. The second timing gear 23 is rotated by the first timing gear 22, and the second shaft 14 connected to the second timing gear 23 rotates. Specifically, the first shaft 5 and the second shaft 14 rotate in the opposite directions at the same speed. Through the rotation of the first shaft 5 and the second shaft 14, the first rotors 6 and the second rotors 15 rotate.

In the lubrication chamber 12, the first timing gear 22, the second timing gear 23, the first bearing 24, and the second bearing 25 are lubricated with the lubricating oil F.

When the first rotors 6 and the second rotors 15 rotate, a region where the volume is expanded and a region where the volume is compressed are formed in each of the exhaust spaces 26. Therefore, gas is sucked from the exhaust passage that is closer to the region where the volume is expanded, and gas is discharged to the exhaust passage that is closer to the region where the volume is compressed. Thus, in the respective exhaust spaces 26, an exhaust gas including hydrogen is sucked from the exhaust spaces 26 located at the stages immediately before or from the film forming chamber 103 via the air-intake hole 7a, and this gas is discharged to the exhaust spaces 26 located at the stages immediately after or to the exhaust hole 7b. Since the gas is sequentially compressed in the respective exhaust spaces 26 more than in the exhaust spaces 26 located at the stages immediately before, even when the pressure in an exhaust-target system becomes sufficiently lower than the atmospheric pressure, the gas can eventually be pressurized to atmospheric pressure or more and discharged. At this time, particularly in a situation where the pressure in the exhaust-target system is high at the start of discharge, gas is pressurized to atmospheric pressure or more in the above-described region where the volume is compressed, in some cases.

As described above, the film forming chamber 103 is evacuated to a predetermined degree of vacuum or is kept at the predetermined degree of vacuum. Since the dry vacuum pump 1 of this embodiment includes the first seal mechanism 11 and the second seal mechanism 16, mixing of the lubricating oil F or its mist in the exhaust gas is suppressed, and contamination in the exhaust-target system is suppressed, as described later. Further, since the ingress of the exhaust gas from the exhaust chamber 13 into the lubrication chamber 12 is suppressed, a situation in which the electromagnetic motor 3 is exposed to the exhaust gas is suppressed. As a result, even when a large amount of hydrogen is contained in the exhaust gas, it is possible to suppress deterioration of the permanent magnet material of the electromagnetic motor 3.
In the first seal mechanism 11 and the second seal mechanism 16, because a seal gas is supplied, and the pair of lip parts c that projects in opposite directions from each other along the axial direction of the shaft are provided, a situation in which the exhaust gas enters the lubrication chamber 12 and the electromagnetic motor 3 is exposed to the exhaust gas is prevented more effectively.

Next, the operation of the first seal mechanism 11 will be described. Note that the operation of the second seal mechanism 16 is the same as that of the seal mechanism 11.

When the gas introduction space 29 is filled with a seal gas, the pressure in the gas introduction space 29 is increased. As the seal gas (seal-gas supply source), an inert gas that does not react with gas components in the exhaust gas is used. As the inert gas, nitrogen gas or argon gas can be used; however, nitrogen gas is preferable because nitrogen gas is low in price, and, even when nitrogen gas is mixed in the exhaust chamber 13, a reduction in the exhaust capability of the dry vacuum pump is suppressed to a low level because nitrogen gas has a high molecular weight.
Through introduction of the seal gas, the flow rate of the seal gas is adjusted such that the gas introduction space 29 has a pressure (pressure at which a sufficient flow rate of the seal gas can be obtained) higher than the maximum pressure in the exhaust spaces 26, to be described later.
Fig. 8 shows a result obtained when the concentration of hydrogen gas leaked into the lubrication chamber 12 is measured with respect to the flow rate of the seal gas, in a case where 100 SLM of hydrogen gas is discharged as the exhaust gas, and nitrogen gas is used as the seal gas. When the flow rate of the seal gas (nitrogen gas) was zero (0 SLM), the hydrogen concentration in the lubrication chamber 12 was 60 ppm. However, when 5 SLM or more of the seal gas (nitrogen gas) was introduced, the hydrogen concentration in the lubrication chamber 12 was of the limit of measurement or less. It was confirmed that hydrogen gas had been prevented from entering the lubrication chamber 12. If the pressure in the lubrication chamber 12 is overly increased by increasing the flow rate of the seal gas, there is a concern that a small amount of oil mist of the lubricating oil F that passes through a gas discharge passage 53 and is not trapped by an oil trap 55 may be discharged to the exhaust line 62. Thus, it is preferable that the pressure in the lubrication chamber 12 not be increased more than necessary.
In forming the crystalline silicon film on the substrate having a large area of more than 1 m², the flow rate of the seal gas, for example, nitrogen gas, is set to 5 SLM to 10 SLM, which is about 1/10 to about 1/20 of the flow rate of the exhaust gas.

In the first seal 27, when the first shaft 5 rotates, the seal gas is caught in the sliding portion between the second lip 32 and the first shaft 5 to push up the second lip 32 and then flows out from a formed gap. The seal gas flowing out is further caught in the sliding portion between the first lip 31 and the first shaft 5 to push up the first lip 31 and then flows out from a formed gap to the lubrication chamber 12. Specifically, the seal gas flows out from the gas introduction space 29, passes through the gaps formed between the first seal 27 and the first shaft 5, and blows out to the lubrication chamber 12.

Also in the second seal 28, when the first shaft 5 rotates, the seal gas is caught in the sliding portion between the third lip 33 and the first shaft 5 to push up the third lip 33 and then flows out from a formed gap. The seal gas flowing out is further caught in the sliding portion between the fourth lip 34 and the first shaft 5 to push up the fourth lip 34 and then flows out from a formed gap. Specifically, the seal gas flows out from the gas introduction space 29, passes through the gaps formed between the second seal 28 and the first shaft 5, and blows out to the exhaust chamber 13.

As described above, with the seal gas blowing out from the gaps formed between the first seal 27 and the first shaft 5 and blowing out from the gaps formed between the second seal 28 and the first shaft 5, a situation in which the lubricating oil F and its mist in the lubrication chamber 12 pass through the first seal 27 to enter the gas introduction space 29 or a situation in which the exhaust gas in the exhaust chamber 13 passes through the second seal 28 to enter the gas introduction space 29 is prevented more effectively.

On the other hand, as shown in Fig. 3, one end of the gas discharge passage 53 may be connected to the motor cover 8, which partitions the interior space of the electromagnetic motor 3 and the lubrication chamber 12, and the other end of the gas discharge passage 53 may be connected to the exhaust line 62. The gas discharge passage 53 can be used to discharge, to the exhaust line 62, the seal gas introduced from the gas introduction space 29 and leaking into the lubrication chamber 12 and the exhaust gas leaking into the lubrication chamber 12.

Furthermore, the gas discharge passage 53 may be provided with a check valve 54 and the oil trap 55.
The check valve 54 permits a flow of gas flowing from the lubrication chamber 12 toward the exhaust line 62 and prohibits the opposite flow. As a result, the exhaust gas in the film forming chamber (vacuum processing chamber) 103 discharged from the exhaust hole 7b of the exhaust chamber 13 is prevented from entering the lubrication chamber 12 via the gas discharge passage 53.

The oil trap 55 is provided at a position in the gas discharge passage 53, between the lubrication chamber 12 and the check valve 54. The oil trap 55 prevents the lubricating oil F in the lubrication chamber 12 from being carried over to enter the exhaust line 62 together with the seal gas (nitrogen gas) introduced from the gas introduction space 29 and leaking into the lubrication chamber 12 and the exhaust gas leaking into the lubrication chamber 12. As the oil trap 55, an appropriate component, such as a filter or a water-cooled trap, can be used, for example.

There is an important phenomenon in which the pressure in the exhaust chamber 13 fluctuates when the dry vacuum pump 1 starts evacuation of the system. As described above, in the dry vacuum pump 1, through the rotation of the first rotors 6 and the second rotors 15, regions where the volumes are reduced or increased are generated in each exhaust space 26. Since the exhaust gas in the exhaust space 26 located at the last stage is compressed to a relatively high pressure, and this exhaust space 26 is adjacent to the second seal 28, the region where the pressure is high (high-pressure region) and the region where the pressure is low (low-pressure region) in the exhaust space 26 located at the last stage are generated around the second seal 28. These regions move in accordance with the rotation of the first rotors 6 and the second rotors 15, and the pressures thereof are also increased and decreased. Thus, from a close consideration of pressure fluctuations, it was found that the pressure imposed on the ring-like second seal 28 is not uniform over the whole circumference of the second seal 28.

The fourth lip 34 is deformed toward the shaft 5 when the pressure in the space that the fourth lip 34 faces is high and is deformed away from the shaft 5 when the pressure in the space that the fourth lip 34 faces is low. Specifically, a small gap is formed at a portion of the fourth lip 34 that faces the high-pressure region, and a large gap is formed at a portion of the fourth lip 34 that faces the low-pressure region. When the flow rate of seal gas flowing from the portion of the fourth lip 34 that faces the low-pressure region is getting larger than the flow rate of seal gas flowing from the portion of the fourth lip 34 that faces the high-pressure region, the third lip 33, corresponding to the circumferential position of this portion of the fourth lip 34 that faces the low-pressure region, is influenced by the deformation of the fourth lip 34 to reduce a gap formed between the third lip 33 and the shaft 5, thereby restricting the flow rate. In short, there is an effect in which the flow rate of the seal gas to the high-pressure region (to which the flow rate of the seal gas is unlikely to flow out) is relatively increased, thereby making the flow rate of the seal gas uniform over the whole circumference of the second seal 28.

In a structure in which the third lip 33 is not provided, when the gap formed between the portion of the fourth lip 34 that faces the low-pressure region and the first shaft 5 becomes larger than the gap formed between the portion of the fourth lip 34 that faces the high-pressure region and the shaft 5, the seal gas in the circumference of the second seal 28 is not restricted according to the flow rate. Thus, a large amount of seal gas flows out from the portion facing the low-pressure region, and the flow rate of seal gas from the portion facing the high-pressure region is reduced or the seal gas flowing out therefrom is stopped. Thus, there is a possibility that the sealing property with respect to the exhaust gas (particularly, hydrogen gas) is reduced. A possibility occurs that the exhaust gas (particularly, hydrogen gas) flows out from the high-pressure region, passes through the gas introduction space 29, leaks into the lubrication chamber 12 together with the seal gas, flows along the surface of the shaft 5, and enters the electromagnetic motor 3.

In a structure in which the fourth lip 34 is not provided, the pressure difference between the high-pressure region and the gas introduction space 29 is relatively large with respect to the pressure difference between the low-pressure region and the gas introduction space 29. Thus, the gap formed between the portion of the third lip 33 that faces the high-pressure region and the first shaft 5 is larger than the gap formed between the portion of the third lip 33 that faces the low-pressure region and the first shaft 5, and the sealing property with respect to the ingress of the exhaust gas from the high-pressure region is reduced.

In this way, when the third lip 33 and the fourth lip 34 are provided in the second seal 28, even when the imposed pressure of the exhaust gas is not uniform over the whole circumference, the third lip 33 and the fourth lip 34 can cooperate to further prevent the exhaust gas from entering the gas introduction space 29.

Even when the pressure of the exhaust gas is uniform over the whole circumference of the second seal 28, there is a conceivable case where the pressure of the exhaust gas is changed with time according to the progress of evacuation of the system, for example. In this case, if only one of the third lip 33 and the fourth lip 34 is provided, the sealing property is reduced or the pressure in the gas introduction space 29 is reduced, due to a pressure fluctuation. In contrast, in the seal mechanism 11, in which the third lip 33 and the fourth lip 34 are provided, it is possible to prevent the exhaust gas from entering the gas introduction space 29, according to a pressure fluctuation, as described above.

The first lip 31 of the first seal 27 prevents the lubricating oil F and its mist from reaching the second lip 32. In a structure in which the first lip 31 is not provided, because the second lip 32 is brought into contact with the lubricating oil F, there is a concern that the lubricating oil F infiltrates the sliding portion of the second lip 32 and the shaft 5, and the lubricating oil F or its mist enters the gas introduction space 29 through penetration due to surface tension in a minute scratch or from a portion where the pressure balance is slightly disrupted. Furthermore, when the pressure balance between the lubrication chamber 12 and the exhaust chamber 13 is changed, the lubricating oil F or its mist enters the gas introduction space 29, in some cases. In contrast, in the seal mechanism 11, in which the first lip 31 and the second lip 32 are provided, it is possible to prevent the lubricating oil F or its mist from entering the gas introduction space 29, according to the pressure fluctuation, as described above.

As described above, the seal mechanism 11 and the second seal mechanism 16 of this embodiment each have a lip structure in which the lips project in opposite directions from each other, along the axial direction of the shaft; therefore, the first seal 27 prevents the lubricating oil F and its mist from entering the gas introduction space 29, and the second seal 28 prevents the exhaust gas from entering the gas introduction space 29. Specifically, the lubricating oil F in the lubrication chamber 12 and the exhaust gas in the exhaust chamber 13 can be sealed with high sealing properties.

As described above, according to this embodiment, since the exhaust gas (particularly, hydrogen) can be prevented from entering the lubrication chamber 12 from the exhaust chamber 13, the permanent magnet material of the electromagnetic motor 3 is not exposed to the exhaust gas. Thus, hydrogen corrosion of the permanent magnet material of the electromagnetic motor 3 by a large amount of hydrogen gas included in the exhaust gas is effectively inhibited, and the reliability of the electromagnetic motor 3 is dramatically improved.

### Second Embodiment

In a second embodiment, a purge mechanism (purge means) 40 is provided in the dry vacuum pump 1 of the first embodiment, and a description overlapped with the first embodiment will be omitted.
The purge mechanism (purge means) 40 will be described below.
As shown in Fig. 9 and Fig. 10, the purge mechanism 40 has a gas introduction section 50 and the gas discharge passage 53. The purge mechanism 40 is used to dilute hydrogen in the exhaust gas leaking into the lubrication chamber 12 via the seal mechanisms 11 and 16, with an inert gas, and an inert gas that does not react with gas components in the exhaust gas is used. As the inert gas, nitrogen gas and argon gas are preferable because nitrogen gas is low in price, and, even when the nitrogen gas is mixed in the exhaust chamber 13, a reduction in the exhaust capability of the dry vacuum pump is suppressed to a low level because nitrogen gas has a high molecular weight. In this embodiment, nitrogen gas is used.

The gas introduction section 50 is formed at a portion of the container of the electromagnetic motor chamber 10, which accommodates the electromagnetic motor 3, and is introduced into the interior space of the electromagnetic motor 3. One end of the gas introduction section 50 is connected to a nitrogen-gas introduction source 51 that is provided outside the electromagnetic motor chamber 10. Thus, nitrogen gas introduced from the nitrogen-gas introduction source 51 is introduced into the lubrication chamber 12 from the interior space of the electromagnetic motor 3 via the gas introduction section 50. While the dry vacuum pump 1 is being operated, the nitrogen gas is always introduced into the lubrication chamber 12 from the interior space of the electromagnetic motor 3. As a result, the interior space of the electromagnetic motor 3 and the lubrication chamber 12 are always maintained in a nitrogen-gas atmosphere.

The interior space of the electromagnetic motor 3 having the gas introduction section 50 is connected to the motor cover 8, which partitions the lubrication chamber 12, and the other end of the gas discharge passage 53 is connected to the exhaust line 62. The gas discharge passage 53 is used to discharge, to the exhaust line 62, the nitrogen gas (purge gas) introduced into the lubrication chamber 12, the seal gas introduced from the gas introduction space 29 and leaking into the lubrication chamber 12, and the exhaust gas leaking into the lubrication chamber 12.

The purge mechanism 40 further includes the check valve 54 and the oil trap 55. The check valve 54 and the oil trap 55 are disposed in the gas discharge passage 53.

The check valve 54 permits a flow of gas flowing from the lubrication chamber 12 toward the exhaust line 62 and prohibits the opposite flow. As a result, the exhaust gas in the film forming chamber (vacuum processing chamber) 103 discharged from the exhaust hole 7b of the exhaust chamber 13 is prevented from entering the lubrication chamber 12 via the gas discharge passage 53.

The oil trap 55 is provided at a position in the gas discharge passage 53, between the lubrication chamber 12 and the check valve 54. The oil trap 55 prevents the lubricating oil F in the lubrication chamber 12 from being carried over to enter the exhaust line 62 together with the nitrogen gas (purge gas) discharged from the lubrication chamber 12, the seal gas introduced from the gas introduction space 29 and leaking into the lubrication chamber 12, and the exhaust gas leaking into the lubrication chamber 12. As the oil trap 55, an appropriate component, such as a filter or a water-cooled trap, can be used, for example.

Depending on the pressure relationship between the exhaust chamber 13 and the gas introduction space 29 or the pressure relationship between the gas introduction space 29 and the lubrication chamber 12, there is a possibility that the exhaust gas including hydrogen sucked into the exhaust chamber 13 from the film forming chamber 103 may enter the lubrication chamber 12 via the seal mechanisms 11 and 16. In this case, there is a concern that the exhaust gas including hydrogen gas entering the lubrication chamber 12 is brought into contact with the electromagnetic motor 3, and the permanent magnet material of the electromagnetic motor 3 is subjected to hydrogen corrosion through the contact with the hydrogen gas and is reduced in excitation power due to the damage thereto. In this case, the function of the dry vacuum pump 1 as the drive source deteriorates, and malfunction is caused in the worst case.

In order to prevent this situation, in this embodiment, the above-described adverse effect on the electromagnetic motor 3 is avoided by decreasing the hydrogen concentration of the exhaust gas entering the lubrication chamber 12, by the purge mechanism 40, while the dry vacuum pump 1 is being operated. Specifically, in this embodiment, during the operation of the dry vacuum pump 1, while a purge gas (nitrogen gas) is introduced from the nitrogen-gas introduction source 51 into the interior space of the electromagnetic motor 3 and the lubrication chamber 12 via the gas introduction section 50, the introduced purge gas is discharged to the exhaust line 62 via the gas discharge passage 53. Thus, the interior space of the electromagnetic motor 3 and the inside of the lubrication chamber 12 can be maintained in the nitrogen-gas atmosphere, and, even when the exhaust gas including hydrogen gas enters the lubrication chamber 12 via the seal mechanisms 11 and 16, it is possible to suppress the hydrogen-gas concentration in the interior space of the electromagnetic motor 3 and the lubrication chamber 12 to a predetermined level or less.

In this embodiment, an appropriate flow rate of nitrogen gas, serving as a purge gas, to be introduced into the interior space of the electromagnetic motor 3 and the lubrication chamber 12 can be selected by mixing helium into the exhaust gas, connecting a helium leak detector to the interior space of the electromagnetic motor 3 or the lubrication chamber 12, and measuring a change in helium concentration.
In this embodiment, the helium concentration was measured with the helium leak detector while the flow rate of nitrogen gas serving as a purge gas introduced via the gas introduction section 50 was changed in a range from 1 SLM to 3 SLM. When the flow rate of nitrogen gas was set to 1.0 SLM or more, the helium concentration became constant at a very low concentration. Therefore, a flow rate of 1.0 SLM was selected in order to effectively use nitrogen gas.
The flow rate of the purge gas is not particularly limited and can be set to an appropriate value in consideration of the volumes of the interior space of the electromagnetic motor 3 and the lubrication chamber 12 and the amount of hydrogen gas entering the lubrication chamber 12.

Furthermore, in this embodiment, since the check valve 54, having the above-described configuration, is provided in the gas discharge passage 53, the exhaust gas discharged to the exhaust line 62 from the film forming chamber 103 via the exhaust hole 7b is prevented from entering the lubrication chamber 12 via the gas discharge passage 53. Thus, the nitrogen-gas atmosphere in the lubrication chamber 12 can be maintained.

Furthermore, in this embodiment, since the oil trap 55 is provided in the gas discharge passage 53, the lubricating oil F in the lubrication chamber 12 is prevented from being discharged to the exhaust line 62 together with the purge gas. Thus, contamination in the exhaust line 62 caused by the oil is prevented, and a clean exhaust system can be obtained.

### Third Embodiment

In a third embodiment, a gas introduction passage 52 is provided in the gas introduction section 50 of the second embodiment, and a description overlapped with the second embodiment will be omitted.
As shown in Fig. 11, the purge mechanism (purge means) 40 has the gas introduction passage 52 and the gas discharge passage 53. The purge mechanism 40 is used to dilute hydrogen in the exhaust gas leaking into the lubrication chamber 12 via the seal mechanisms 11 and 16, with an inert gas. A description will be given of a case where nitrogen gas is used as the inert gas.

The gas introduction passage 52 is formed in the rotational axis (rotor) of the electromagnetic motor 3 and a shaft center portion of the shaft 5. One end of the gas introduction passage 52 is connected to the nitrogen-gas introduction source 51, provided outside the electromagnetic motor 3, via the gas introduction section 50, formed at the container of the electromagnetic motor chamber 10. The other end of the gas introduction passage 52 faces an outer circumferential portion of the shaft 5 located in the lubrication chamber 12. Thus, nitrogen gas introduced from the nitrogen-gas introduction source 51 is introduced into the lubrication chamber 12 via the gas introduction passage 52. The nitrogen gas is always introduced into the lubrication chamber 12 while the dry vacuum pump 1 is being operated. As a result, the lubrication chamber 12 is always maintained in the nitrogen-gas atmosphere.
Note that a small gap is provided between the gas introduction section 50 and the gas introduction passage 52 at the axial end of the shaft 5 such that the shaft 5 can rotate. Most of a purge gas introduced from the gas introduction section 50 may be introduced into the gas introduction passage 52, and part of the purge gas may be used to purge the inside of the electromagnetic motor chamber 10.

One end of the gas discharge passage 53 is connected to the motor cover 8, which partitions the lubrication chamber 12, and the other end of the gas discharge passage 53 is connected to the exhaust line 62. The gas discharge passage 53 is used to discharge, to the exhaust line 62, the nitrogen gas (purge gas) introduced into the lubrication chamber 12, the seal gas introduced from the gas introduction space 29 and leaking into the lubrication chamber 12, and the exhaust gas leaking into the lubrication chamber 12.

In third embodiment, since the gas introduction passage 52 is provided in the rotational axis of the electromagnetic motor 3 and the shaft center portion of the shaft 5, there is an advantage that piping is simple because piping drawing around the electromagnetic motor 3 is unnecessary. Furthermore, since nitrogen gas is directly introduced from the periphery of the rotating shaft 5 into the lubrication chamber 12, there is an advantage that the periphery of the shaft 5 can be always covered with the nitrogen gas, and the ingress of the exhaust gas including hydrogen into the electromagnetic motor 3 can be effectively prevented. Since the hydrogen gas in the exhaust gas leaking into the lubrication chamber from the exhaust chamber via the seal mechanisms 11 and 16 is directly diluted by the purge mechanism, and the hydrogen-gas partial pressure of the exhaust gas including the hydrogen gas leaking into the lubrication chamber from the exhaust chamber is also reduced, hydrogen corrosion of the permanent magnet material of the electromagnetic motor 3 can be prevented more effectively.
In this way, it is possible to prevent malfunction of the drive source caused by hydrogen included in the exhaust gas.

Although the embodiments of the present invention have been described as above, the present invention is not limited to the above-described embodiments, and various modifications can be made based on the technical idea of the present invention.

For example, a description has been given of a case where the first lip 31 and the second lip 32 of the first seal 27 have an integral structure, and the third lip 33 and the fourth lip 34 of the second seal 28 have an integral structure. However, the first lip 31, the second lip 32, the third lip 33, the fourth lip 34 may be manufactured as individual units, and then, the first lip 31 and the second lip 32 may be combined to form the first seal 27, and the third lip 33 and the fourth lip 34 may be combined to form the second seal 28.
At this time, it is preferable that the first lip 31 and the second lip 32 be in close contact with each other and the third lip 33 and the fourth lip 34 be in close contact with each other, to be regarded as an integral structure such that a gap formed with respect to the shaft is adjusted upon reception of an influence of the deformation of the mating lip. Furthermore, it is more preferable to provide a structure in which the lips can be embedded to be mutually positioned when the lips are combined, because the first seal 27 and the second seal 28 can be precisely configured.
In this way, when the lips are manufactured as individual units, the manufacturing process becomes easy, and the cost can be reduced.

Furthermore, for example, the first lip 31 and the second lip 32 of the first seal 27 and the third lip 33 and the fourth lip 34 of the second seal 28 are not necessarily the same size. The first lip 31 and the second lip 32, and the third lip 33 and the fourth lip 34 may be manufactured such that a lip with high elasticity is provided at a place where the pressure difference is large, and a lip with flexibility is provided at a place where the pressure difference is small, according to the operation of the dry vacuum pump 1.
At this time, since the respective lips have different sizes, the first lip 31, the second lip 32, the third lip 33, and the fourth lip 34 may be manufactured as individual units.
By providing the lip structures corresponding to the pressure differences according to the operation of the dry vacuum pump 1, the sealing property is further improved. Therefore, the hydrogen corrosion of the permanent magnet material of the electromagnetic motor 3 caused by a large amount of hydrogen gas included in the exhaust gas is further inhibited, and the reliability of the electromagnetic motor 3 is further enhanced.

Furthermore, for example, in the above-described embodiments, the first seal mechanism 11 and the second seal mechanism 16 are used to seal between the lubrication chamber 12 and the exhaust chamber 13; however, the place at which they are used is not limited thereto, and they may be used to seal between the bearing chamber (next chamber) 17 and the exhaust chamber 13. As a result, particularly when the degree of vacuum in the exhaust-target system is not large, the lubricating oil etc. filled in the bearing chamber 17 can be prevented from leaking into the exhaust chamber 13.

Furthermore, for example, in the above-described embodiments, the seal mechanisms 11 and 16, having the above-described structures, are disposed as seals disposed between the lubrication chamber 12 and the exhaust chamber 13; however, the structures thereof are not limited to thereto, and the above-described seal mechanisms may have an O-ring structure in cross-section. Furthermore, in the seal mechanisms 11 and 16, the second seal 28, disposed closer to the exhaust chamber 13, may be omitted.

### {Reference Signs List}

1 dry vacuum pump
3 electromagnetic motor
4 rotation transfer mechanism
5 shaft
6, 15 rotor
11, 16 seal mechanism
12 lubrication chamber
13 exhaust chamber
29 gas introduction space
31 first lip
32 second lip
33 third lip
34 fourth lip
40 purge mechanism
50 gas introduction section
51 purge gas (nitrogen gas) introduction source
52 gas introduction passage
53 gas discharge passage
54 check valve
55 oil trap
61 exhaust system
62 exhaust line
101 vacuum processing apparatus (plasma CVD apparatus)
103 vacuum processing chamber (film forming chamber)
104, 105, 106 gas supply flow path
110 evacuation flow path
111 flow control valve
112, 113 flow path
117 combustible exhaust line
118 combustion-supporting exhaust line
120 vacuum gauge
F lubricating oil

## Claims

1. A dry vacuum pump comprising:
a shaft that is rotationally driven by an electromagnetic motor; and
rotors that are attached to the shaft and provided in an exhaust chamber and that suck an exhaust gas in a vacuum processing chamber into the exhaust chamber and discharge the exhaust gas,
wherein, between the exhaust chamber and a next chamber located next to the exhaust chamber, an exhaust-chamber-side seal that seals between an exhaust-chamber partitioning wall portion that partitions the exhaust chamber and the shaft and a next-chamber-side seal that seals between a next-chamber partitioning wall portion that partitions the next chamber and the shaft are provided;
a gas introduction space to which a seal gas is supplied is provided between the exhaust-chamber-side seal and the next-chamber-side seal;
the exhaust-chamber-side seal and the next-chamber-side seal each have a ring-like base part that is fixed to the exhaust-chamber partitioning wall portion or the next-chamber partitioning wall portion and a pair of ring-like lip parts that extends from the base part toward the shaft; and
the pair of lip parts extends such that the distance therebetween is gradually increased from the base part toward the shaft, and the tips of the pair of lip parts can be brought into elastic contact with the shaft.

2. A dry vacuum pump according to claim 1, wherein the base part and the pair of lip parts are integrally structured.

3. A dry vacuum pump according to claim 1 or 2, wherein the pair of lip parts is formed as individual members, and the base ends of the lip parts are fixedly combined to form the base part.

4. A dry vacuum pump according to one of claims 1 to 3, wherein portions of the lip parts that are brought into contact with the shaft are made of polytetrafluoroethylene.

5. A dry vacuum pump according to one of claims 1 to 4,
wherein an electromagnetic motor chamber that accommodates the electromagnetic motor is provided at a position where it sandwiches the next chamber with the exhaust chamber;
the next chamber is a lubrication chamber in which lubricating oil is stored; and
the exhaust gas includes hydrogen gas.

6. A dry vacuum pump according to claim 5, wherein a gas discharge passage that is connected to an exhaust line to which the exhaust gas is discharged from the exhaust chamber is further provided, and an oil trap that traps the lubricating oil flowing toward the exhaust line is provided in the gas discharge passage.

7. A dry vacuum pump according to one of claims 1 to 6, wherein a gas discharge passage that is connected to an exhaust line to which the exhaust gas is discharged from the exhaust chamber is further provided, and a check valve that permits a flow of gas flowing toward the exhaust line and prohibits a flow in the opposite direction is provided in the gas discharge passage.

8. A dry vacuum pump comprising:
an electromagnetic motor that is accommodated in an electromagnetic motor chamber;
a shaft that is rotationally driven by the electromagnetic motor; and
rotors that are attached to the shaft and provided in an exhaust chamber and that suck an exhaust gas including hydrogen gas in a vacuum processing chamber into the exhaust chamber and discharge the exhaust gas including hydrogen gas,
wherein purge means for introducing an inert gas into the electromagnetic motor chamber and for discharging a gas in the electromagnetic motor chamber is provided.

9. A dry vacuum pump according to claim 8,
wherein a lubrication chamber in which lubricating oil is stored is provided between the exhaust chamber and the electromagnetic motor chamber; and
the inert gas introduced into the electromagnetic motor chamber by the purge means is discharged through the lubrication chamber.

10. A dry vacuum pump comprising:
an electromagnetic motor that is accommodated in an electromagnetic motor chamber;
a shaft that is rotationally driven by the electromagnetic motor;
rotors that are attached to the shaft and provided in an exhaust chamber and that suck an exhaust gas including hydrogen gas in a vacuum processing chamber into the exhaust chamber and discharge the exhaust gas including hydrogen gas; and
a lubrication chamber that is provided between the exhaust chamber and the electromagnetic motor chamber and in which lubricating oil is stored,
wherein purge means for introducing an inert gas into the lubrication chamber from outside the electromagnetic motor chamber through a gas introduction passage formed in the shaft and for discharging a gas in the lubrication chamber is provided.

11. A dry vacuum pump according to claim 8,
wherein a lubrication chamber in which lubricating oil is stored is provided between the exhaust chamber and the electromagnetic motor chamber; and
the exhaust gas includes hydrogen gas.

12. A dry vacuum pump according to claim 9 or 10, wherein the exhaust gas includes hydrogen gas.

13. A dry vacuum pump according to claim 11 or 12, wherein the purge means includes a gas discharge passage that is connected to an exhaust line to which the exhaust gas is discharged from the exhaust chamber, and an oil trap that traps the lubricating oil flowing toward the exhaust line is provided in the gas discharge passage.

14. A dry vacuum pump according to one of claims 8 to 13, wherein the purge means includes a gas discharge passage that is connected to an exhaust line to which the exhaust gas is discharged from the exhaust chamber, and a check valve that permits a flow of gas flowing toward the exhaust line and prohibits a flow in the opposite direction is provided in the gas discharge passage.
